# FASCICULE DE BREVET EUROPEEN

(11) **EP 0 680 849 B1**
(45) Date de publication et mention de la délivrance du brevet: **07.10.1998**
(21) Numéro de dépôt: 95401020.3
(22) Date de dépôt: 03.05.1995
(51) Int. Cl.: B60R 16/02, H01R 35/02

(54) **Connecteur électrique tournant comprenant des moyens de liaison pour conducteur électrique souple**
Elektrischer Drehverbinder mit Verbindungsmitteln für ein flexibles elektrisches Kabel
Rotary electric connector with connection means for a soft electric cable

(30) Priorité: 04.05.1994 FR 9405460; 26.05.1994 FR 9406373
(43) Date de publication de la demande: 08.11.1995
(73) Titulaire: MAGNETI MARELLI FRANCE, 92000 Nanterre (FR)
(72) Inventeur: Hallet, Michel, F-14320 Clinchamps sur Orne (FR); Geslot, Francis, F-14000 Caen (FR)
(74) Mandataire: Texier, Christian

(56) Documents cités:
- EP-A- 0 444 584
- EP-A- 0 579 188
- DE-A- 3 641 706
- DE-A- 4 027 952
- DE-U- 8 505 830
- US-A- 4 824 396

## Description

La présente invention concerne le domaine des contacteurs électriques tournants.

Plus précisément, la présente invention concerne les contacteurs du type comprenant:
- un premier élément de boîtier fixe,
- un second élément de boîtier mobile à rotation par rapport au premier élément de boîtier fixe, et
- un organe conducteur électrique souple placé entre l'élément fixe et l'élément mobile du boîtier et relié à ceux-ci. Ces contacteurs sont en fait des connecteurs, car ils ne comportent aucun élément de contact frottant.

La présente invention trouve notamment, mais non exclusivement, application à la transmission de signaux électriques entre des moyens liés au volant d'un véhicule automobile, par exemple un système de gonflage de sac de protection type airbag et des moyens de commande indépendants du volant liés à la colonne de direction.

De nombreux contacteurs électriques tournants du type rappelé ci-dessus ont déjà été proposés.

On peut trouver par exemple un descriptif général de ces contacteurs dans les documents GB-A-869275, GB-A-2216476, US-A-3525536, FR-A-2494922, FR-A-2667457, US-A-4789342, US-A-4540223, FR-A-2667458, FR-A-2667456, FR-A-2477789, DE-A-751684, FR-A-2249458, GB-A-2164506, CH-A-167629, US-A-4422699, US-A-4836795, DE-A-3041258, US-A-4451105, US-A-3525536, US-A-4722690, US-A-4875860.

Dans la majorité de ces contacteurs électriques tournant connus, le premier élément de boîtier fixe et le second élément de boîtier mobile à rotation par rapport au premier élément de boîtier fixe délimitent en combinaison une chambre annulaire dans laquelle le conducteur souple est enroulé en spirale. Ainsi, dans la chambre annulaire le conducteur souple s'étend dans une direction générale périphérique. Cependant, les extrémités de ce conducteur souple sont reliées à des contacts axiaux placés dans des corps de connecteurs ou encore engagées dans ces corps de connecteur orientés axialement sur les éléments précités du contacteur.

De ce fait, il est généralement nécessaire de couder les extrémités du conducteur souple, ce qui conduit à des zones de faiblesse sur les extrémités de celui-ci.

Le document le plus proche EP-A-0 444 584 décrit un contacteur électrique tournant ne comportant aucun élément de contact frottant comprenant deux éléments susceptibles de rotation relative et un conducteur souple placé entre ces deux éléments, et des boîtiers de protection en matière plastique surmoulés sur le conducteur souple, au niveau des zones de ce conducteur émergeant du contacteur.

La présente invention a maintenant pour but de perfectionner les contacteurs électriques tournant connus.

Ce but est atteint selon la présente invention grâce à un contacteur électrique tournant du type comprenant deux éléments susceptibles de rotation relative et un conducteur souple placé entre ces deux éléments, et au moins sur une extrémité du conducteur souple, un boitier de protection surmoulé sur le conducteur souple, le boîtier de protection comprenant un élément qui entoure totalement le conducteur, caractérisé par le fait que cet élément du boitier se prolonge longitudinalement par un embout latéral accolé contre une face du conducteur et prolongé lui-même par une languette reliée à l'embout par l'intermédiaire d'une ligne de faiblesse inclinée par rapport à la direction longitudinale du conducteur de sorte qu'après pliage de la languette contre l'embout autour de la ligne de faiblesse, le conducteur souple soit prié et que la zone de pliage ainsi obtenue soit protégée.

Selon une autre caractéristique avantageuse de l'invention, la ligne de faiblesse du boîtier de protection est orientée d'environ 45° par rapport à sa direction longitudinale.

D'autres caractéristiques, buts et avantages de la présente invention apparaîtront à la lecture de la description détaillée qui va suivre, et en regard des dessins annexés donnés à titre d'exemple non limitatif et sur lesquels :
- la figure 1 représente une vue schématique en perspective éclatée d'un contacteur électrique conforme à la présente invention,
- la figure 2 représente une vue schématique en perspective d'un boîtier de protection surmoulé sur une extrémité d'un conducteur électrique souple conforme à une première variante de réalisation de la présente invention, avant pliage de ce boîtier de protection,
- la figure 3 représente une vue en perspective du même boîtier de protection, après pliage,
- la figure 4 représente une première vue en perspective d'un couvercle pivotant du contacteur conforme à la présente invention,
- la figure 5 représente une seconde vue en perspective, opposée à la figure 4, du même boîtier pivotant,
- la figure 6 représente une vue en coupe axiale du même boîtier pivotant,
- la figure 7 représente une seconde vue en coupe axiale du même boîtier pivotant, selon un plan de coupe orthogonale à celui de la figure 6,
- la figure 8 représente une vue similaire à la figure 4 et illustre l'engagement d'un conducteur électrique souple équipé d'un boîtier de protection sur le boîtier pivotant,
- la figure 9 représente une vue similaire à la figure 8 et représente le conducteur électrique souple équipé du boîtier de protection engagé sur le couvercle pivotant,
- la figure 10 représente une vue en coupe axiale similaire à la figure 6 du couvercle pivotant équipé du conducteur électrique souple muni d'un boîtier de protection conforme à la première variante de réalisation de la présente invention
- la figure 11 représente une vue schématique en perspective d'un boîtier de protection surmoulé sur une extrémité d'un conducteur électrique souple conforme à une seconde variante de réalisation de la présente invention, avant pliage de ce boîtier de protection,
- la figure 12 représente une vue en perspective du même boîtier de protection, après pliage,

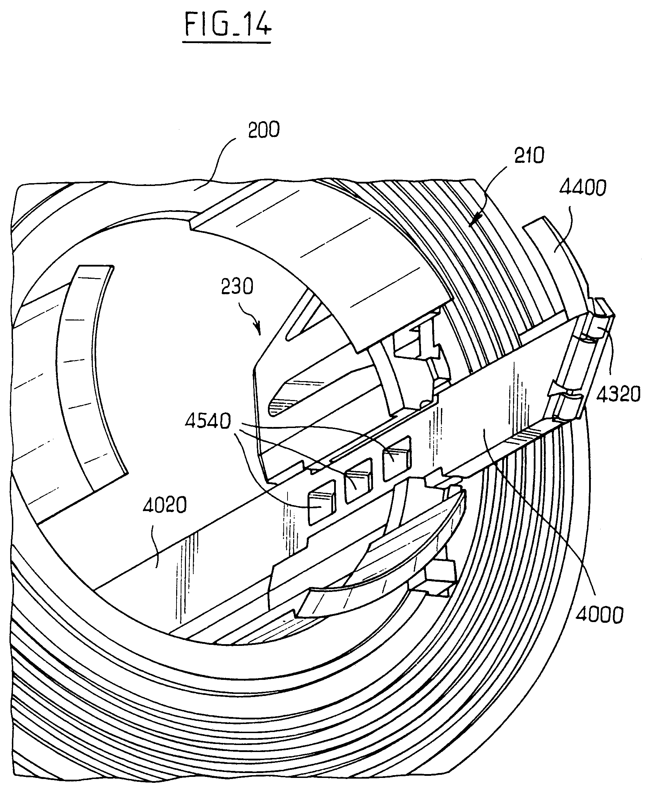

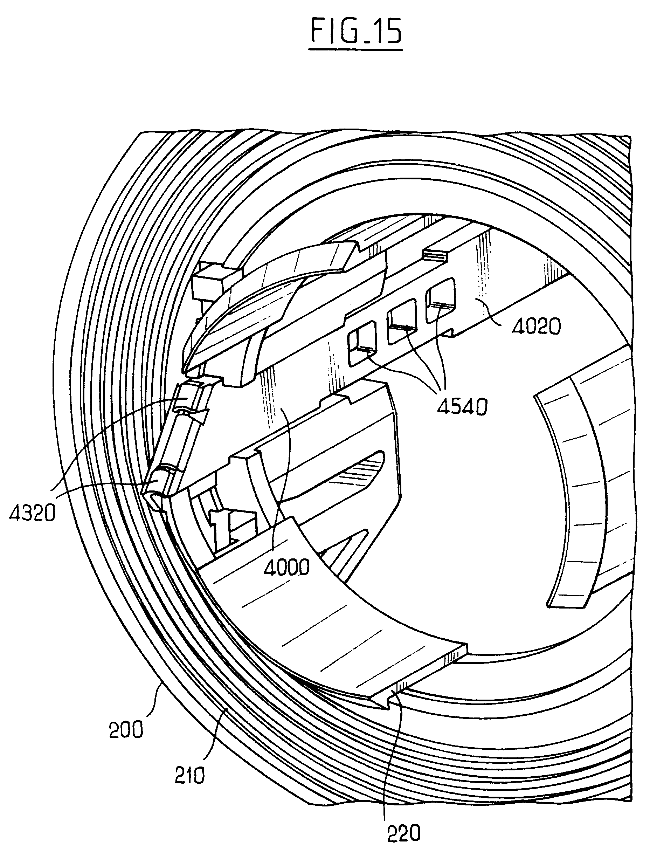

- les figures 13, 14 et 15 représentent des vues similaires aux figures 8 et 9 et illustrent diverses étapes successives de l'engagement d'un conducteur électrique souple équipé d'un boîtier de protection conforme à la seconde variante de réalisation, sur le couvercle pivotant, et
- la figure 16 représente une vue en plan d'un boîtier conforme à la seconde variante de réalisation, surmoulé sur un ruban électriquement conducteur et replié sur celui-ci.

Le contacteur électrique tournant représenté sur les figures annexées comprend essentiellement un boîtier fixe 100, un couvercle rotatif 200 et un conducteur souple 300.

Le boîtier fixe 100 et le couvercle pivotant 300 peuvent faire l'objet de nombreux modes de réalisation. Ils sont formés de préférence par moulage en matière plastique.

Selon le mode de réalisation particulier et non limitatif représenté sur les figures annexées, le boîtier 100 comprend essentiellement deux parois circulaires concentriques 110, 112 reliées entre elles par une paroi de base en forme de couronne. Les parois précitées délimitent ainsi une chambre annulaire 116 apte à recevoir le conducteur 300.

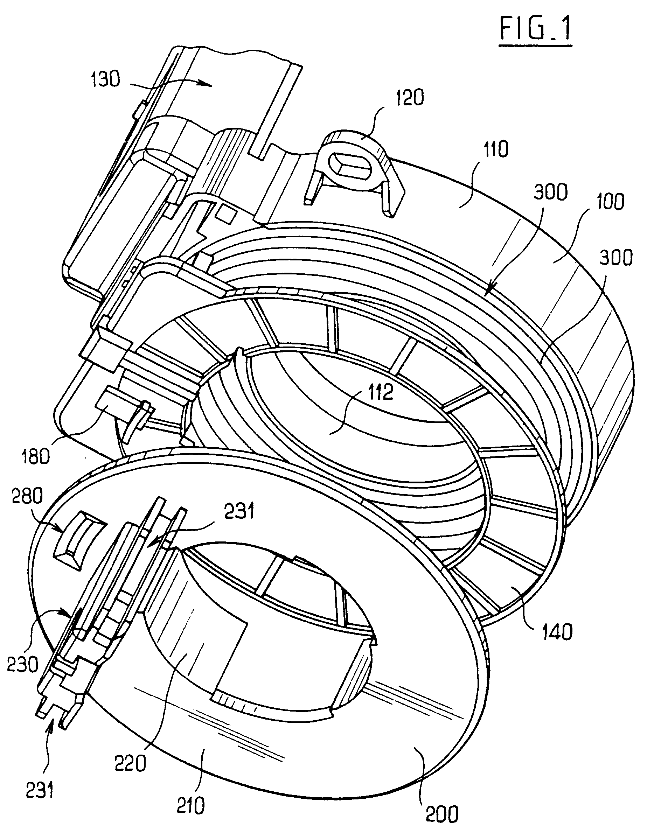

La paroi cylindrique externe 110 est pourvue de préférence de points de fixation 120 formés par exemple d'oeillets comme représenté sur la figure 1 annexée.

En outre, la paroi cylindrique extérieure 110 est munie de préférence, sur sa périphérie extérieure, d'un corps de connecteur 130. Ce corps de connecteur 130 peut comprendre des contacts électriques destinés à être reliés respectivement à des pistes du conducteur souple 300. En variante, le corps de connecteur 130 peut être équipé au contraire pour recevoir en traversée une extrémité du conducteur électrique souple 300 pourvue d'un boîtier de protection 400 conforme à la présente invention.

Le connecteur 130 s'étend avantageusement axialement, c'est-à-dire dans une direction générale parallèle à l'axe des parois 110, 112.

Selon le mode de réalisation préférentiel représenté sur la figure 1 annexée, la cage cylindrique délimitée par les parois 110, 112 est complétée par une entretoise 140 en forme de couronne. Cette entretoise 140 est liée à rotation avec le boîtier 100. Elle obture partiellement le contour d'ouverture de la chambre annulaire 116 précitée.

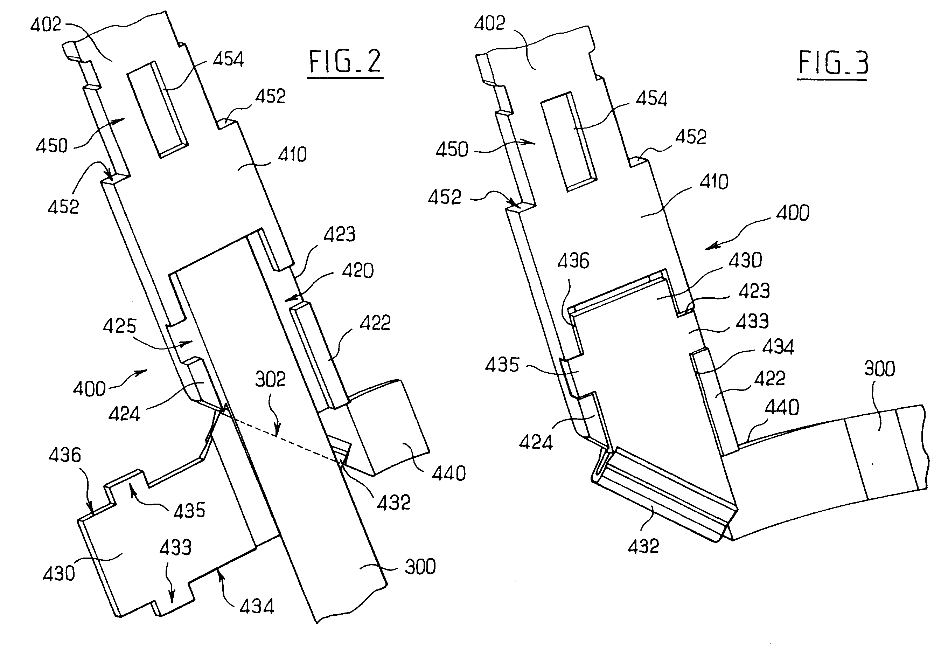

Par ailleurs, selon le mode de réalisation particulier non limitatif représenté sur les figures annexées, le couvercle pivotant 200 comprend essentiellement une paroi plane 210 en forme de couronne, coaxiale au boîtier 100. La paroi 210 est munie sur sa périphérie interne d'un fût cylindrique 220 ou de différents segments cylindriques équi-répartis autour de son axe, comme représenté sur la figure 2. Ce fût 220 est engagé dans l'espace interne du boîtier 100. Ainsi le couvercle 200 est monté et guidé à rotation sur le boîtier 100.

Le couvercle 200 est retenu à translation sur le boîtier 100 par tout moyen approprié, par exemple à l'aide de dents 222 en saillie sur l'extrémité du fût 220 ou des segments composant ce fût 220, lesquelles dents 222 viennent en prise avec la paroi cylindrique 112.

Par ailleurs, le couvercle 210 est muni également d'un corps de connecteur 230, avantageusement au niveau de sa périphérie interne, sur sa face opposée au fût 220. Le corps de connecteur 230 s'étend dans une direction axiale, c'est-à-dire parallèlement à l'axe du couvercle 200 et du boîtier 100. Le corps de connecteur 230 peut comprendre des contacts électriques conçus pour être reliés respectivement aux pistes du conducteur électrique souple 300, ou encore de préférence, comme on l'explicitera par la suite, être adapté pour recevoir en traversée une extrémité du conducteur électrique souple 300 équipée d'un boîtier de protection 400 conforme à la présente invention.

Selon la représentation de la figure 1, le couvercle 200 est ainsi placé sur la face de l'entretoise 140 opposée à la chambre annulaire 116.

De préférence, le boîtier 100, avantageusement l'entretoise 140 et le couvercle pivotant 200, sont équipés de moyens 180, 280 adaptés pour visualiser la position relative en rotation du couvercle pivotant 200 par rapport au boîtier fixe 100. Ces moyens de repérage 180, 280 sont précisés dans une demande de brevet déposée en parallèle par la Demanderesse et pour cette raison ne seront pas identifiés dans le détail par la suite.

Le conducteur souple 300 peut faire l'objet de nombreux modes de réalisation. Il peut s'agir par exemple d'un faisceau de fils électriquement conducteurs isolés ou encore de préférence d'un circuit imprimé ou d'un film plastique souple pourvu de plusieurs pistes métallisées parallèles.

Le couvercle pivotant 200 est conçu pour être lié à rotation avec le volant par tout moyen approprié, par exemple au niveau des flancs 231 du corps de connecteur 230.

On va maintenant préciser la structure du boîtier de protection 400 conforme à la présente invention placé au moins sur une extrémité du conducteur souple 300, par exemple l'extrémité de ce conducteur destinée à être engagée dans le corps de connecteur 230 lié au couvercle pivotant 200.

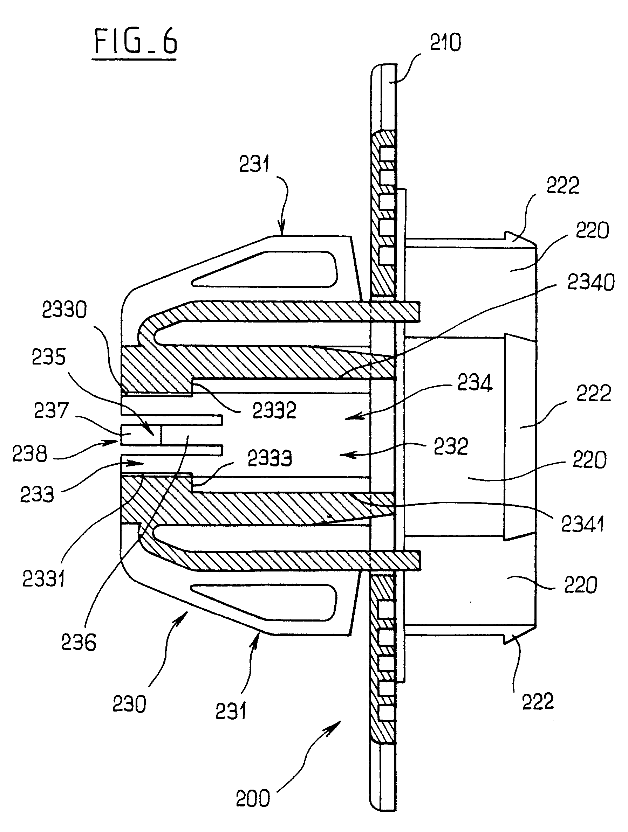

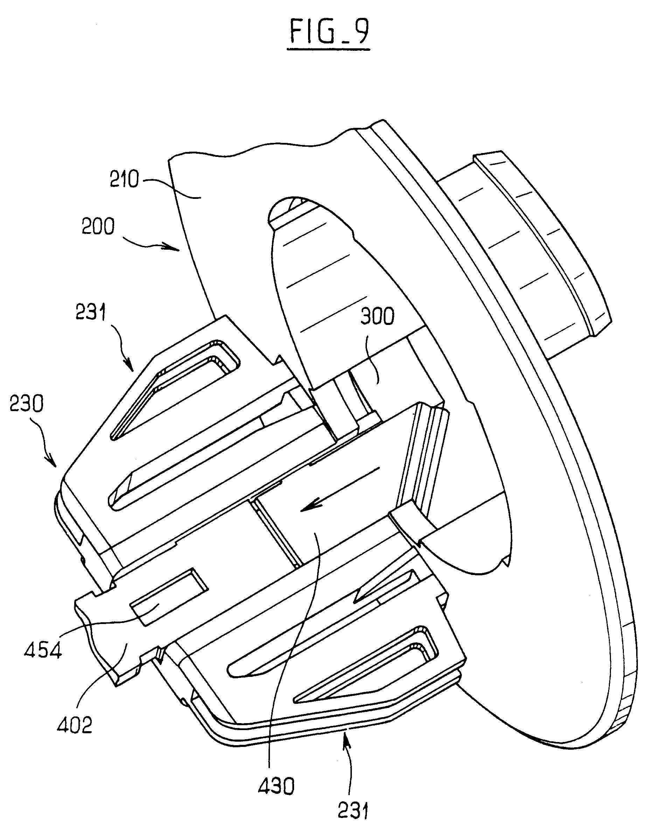

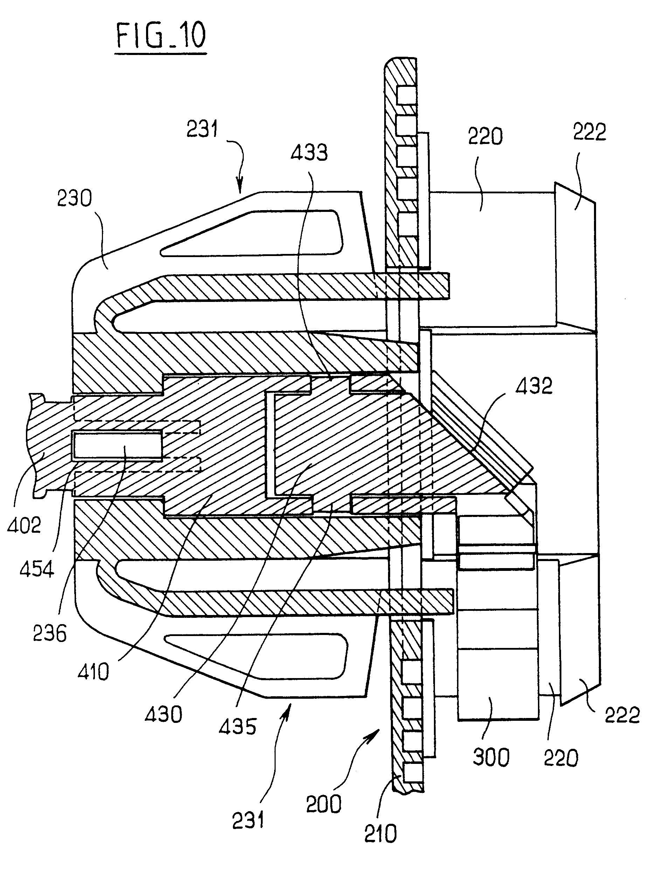

Plus précisément on va tout d'abord décrire la structure du boîtier de protection 400 conforme à la première variante de réalisation représentée sur les figures 2 à 10.

Ce boîtier 400 est conçu pour assurer la protection mécanique et une protection contre les détériorations électriques du conducteur souple 300.

Ce boîtier de protection 400 est avantageusement surmoulé sur le conducteur souple 300.

Plus précisément encore, le boîtier de protection 400 est adapté selon l'invention pour être surmoulé en ligne sur le conducteur électrique souple 300. C'est-à-dire que de préférence le boîtier de protection 400 est surmoulé sur le conducteur souple 300 au niveau d'un poste de surmoulage situé entre une bobine d'alimentation de conducteur souple nu 300 et un poste de réception comprenant une bobine de réception du conducteur souple 300 équipé du boîtier de protection 400.

Le cas échéant, le boîtier de protection 400 peut être venu de moulage avec un enrobage 402 qui entoure totalement ou le cas échéant de façon discontinue, une partie au moins de la longueur du conducteur souple 300.

Le corps du boîtier de protection 400 représenté sur les figures 2 et 3 comprend une première zone 410 de section droite rectangulaire constante qui entoure totalement le conducteur 300.

Cet élément 410 se prolonge longitudinalement par un embout latéral 420. Ainsi cet embout 420 est accolé à une face du conducteur souple 300.

L'embout 420 est muni de deux nervures longitudinales 422, 424 qui encadrent le conducteur souple 300. Ces nervures 422, 424 sont munies chacune sur leur longueur d'une découpe 423, 425.

En outre, l'embout 420 se prolonge, à l'opposé de l'élément 410, par une languette 430. Cette languette 430 présente un contour général rectangulaire. Elle est à l'origine coplanaire de l'embout 420. Par ailleurs, la languette 430 s'étend de préférence à 90° de la direction longitudinale du conducteur 300.

La languette 430 est reliée à l'embout 420 par une zone de liaison souple de faible épaisseur 432. A titre d'exemple non limitatif la zone de liaison souple 432 peut présenter une épaisseur de l'ordre de 0,3mm.

Cette zone de liaison souple 432 est inclinée par rapport à la direction longitudinale du conducteur souple 300, avantageusement de l'ordre de 45°.

La largeur de la languette 430 est complémentaire de la largeur de la chambre formée sur l'embout 420 entre les nervures 422, 424. En outre, la languette 430 est munie sur ses flancs 434, 436 d'ergots 433, 435 de contour, par exemple rectangulaire, complémentaire des découpes 423, 425. En outre, le positionnement des ergots 433, 435 sur la languette 430 est tel que, après pliage de la languette 430 autour de la ligne 432, les ergots 433, 435 pénètrent dans lesdites découpes 423, 425.

Le boîtier de protection 400 présente en outre de préférence sur l'extrémité de l'embout 420 opposé à l'élément 410, et sur le côté opposé à la languette 430, un appui 440 orienté également à 90° de la direction longitudinale du conducteur 300.

Après pliage du boîtier de protection 400 autour de la ligne de faiblesse 432, la languette 430 pénètre dans la chambre de l'embout 420 formée entre les nervures 422, 424 et les ergots 433, 435 pénètrent dans les découpes 423, 425. Le conducteur souple 300 est lui-même plié autour d'une ligne 302 présentant la même inclinaison que la ligne de faiblesse 432, soit avantageusement 45° par rapport à la direction longitudinale du conducteur 300. Le conducteur 300 est ainsi plié de l'ordre de 90° et prend appui sur la structure 440.

Le boîtier de protection 400 conforme à la présente invention permet un pli naturel du ruban formant le conducteur 300. Le cas échéant on peut envisager de marquer au préalable le ruban 300 sur la ligne 302 de pliage précitée pour faciliter le pli de ce ruban conducteur 300.

En outre, de préférence, l'élément 410 du boîtier de protection se prolonge à l'opposé de l'embout 420 par un élément 450 de plus faible section transversale de sorte qu'un décrochement 452 dirigé à l'opposé de l'embout 420 soit défini au niveau de la zone de liaison entre les éléments 410, 450. Plus précisément, il est ainsi prévu un décrochement 452 de chaque côté de l'élément 450, soit sur les deux flancs de celui-ci.

De plus, le prolongement 450 formé sur le boîtier de protection 400 est muni de préférence d'une encoche centrale 454, par exemple de contour rectangulaire, et avantageusement longitudinale.

Le boîtier de protection 400 plié sur le ruban conducteur 300 évite tout frottement du ruban sur un élément en mouvement, dans cette zone rigide.

Comme on l'a mentionné précédemment, le boîtier de protection 400 précité peut être utilisé pour fixer une extrémité du ruban conducteur 300 sur le corps de connecteur 230 lié au couvercle pivotant 200 ou sur le connecteur 130 lié au boîtier fixe 100.

Par la suite on va décrire une structure de corps de connecteur 230 liée au couvercle pivotant 200 adaptée pour recevoir ce boîtier de protection 400.

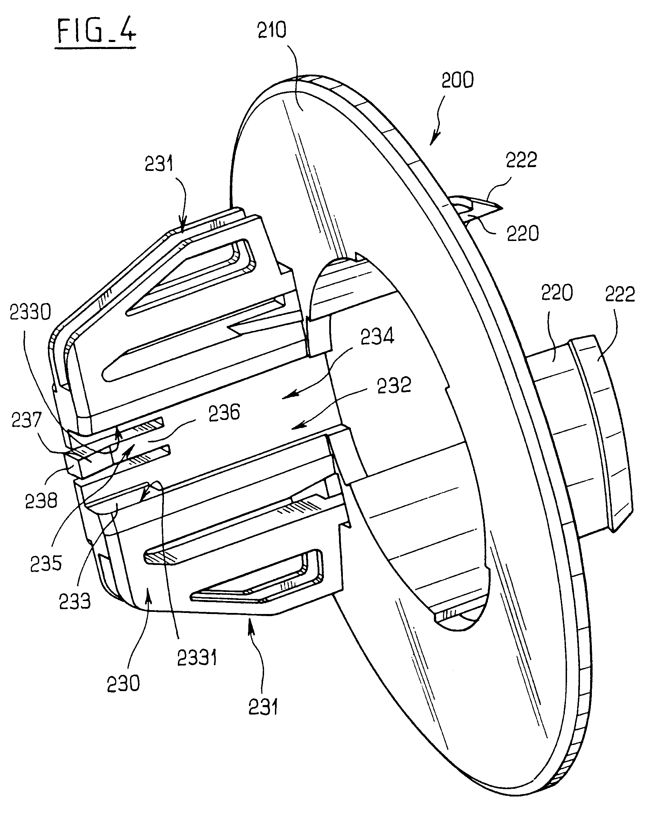

Selon le mode de réalisation représenté sur les figures 4 et suivantes, le corps de connecteur 230 comprend un bloc venu de moulage avec le couvercle 200. Ce bloc formant le corps de connecteur 230 présente une symétrie par rapport à un plan axial, c'est-à-dire un plan passant par l'axe du couvercle 200. Ce bloc 230 a la forme générale d'une lame disposée tangentiellement par rapport à la périphérie interne de la couronne constituant le couvercle pivotant 200.

Par ailleurs, le corps de connecteur 230 présente une gorge axiale 232 conçue pour recevoir le boîtier de protection 400.

Plus précisément la gorge 232 se décompose axialement en deux zones 233,234.

La première zone 234 de la gorge 232 débouche sur l'extrémité libre du bloc 230 opposée à la paroi de base 210. Cette zone 233 de la gorge 232 présente une section droite en U. La largeur de cette zone 233, c'est-à-dire la distance séparant les flancs 2330 et 2331 de cette zone est de préférence égale à la largeur du prolongement 450 précité.

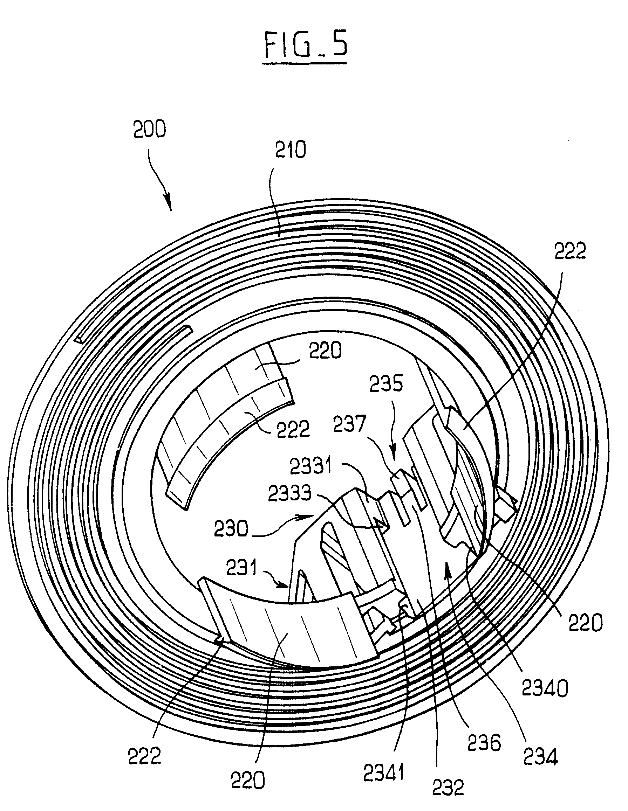

La seconde zone 233 de la gorge 232 est adjacente à la paroi de base 210. Au niveau de cette zone 234 la gorge 232 présente des bords convergents. On aperçoit notamment cette zone 234 à bords convergents sur la figure 5.

La largeur interne de la zone 234 à bords convergents, c'est-à-dire la distance séparant les flancs 2340, 2341 de celle-ci est complémentaire de la largeur de l'élément 410 du boîtier et de l'embout 420. De préférence, l'embout 420 présente en effet la même largeur que l'élément 410 précité.

En revanche, la largeur d'ouverture de la zone 234, c'est-à-dire la distance séparant les deux bords convergents de la zone 234 est de préférence égale à la largeur de la zone 233 précitée.

Après pliage de la languette 430 sur l'embout 420, le boîtier de protection 400 présente une épaisseur sensiblement constante.

La profondeur de la rainure à bords convergents formée au niveau de la zone 234 est avantageusement de l'ordre de grandeur de l'épaisseur du boîtier de protection 400.

On notera qu'il est défini entre les deux zones 233, 234 de la gorge 232, plus précisément au niveau du raccordement respectivement des flancs 2330 et 2331 sur les flancs 2340 et 2341, des décrochements 2332, 2333 dirigés vers la paroi de base 210.

Comme on le précisera par la suite, ces décrochements 2332, 2333 sont destinés à servir d'appui respectivement aux décrochements 452 prévus sur le boîtier de protection 400.

En outre, de préférence, le corps de connecteur 230 est muni, au niveau de la gorge 232, d'une structure de verrouillage 235.

Cette structure de verrouillage 235 est formée avantageusement d'une languette 236 longitudinale venue de moulage sur le fond de la gorge 232.

Plus précisément, la languette 236 est munie avantageusement sur sa face coplanaire du fond de la gorge 232 d'une denture en saillie 237. Les positionnements de la languette 236 et de la denture 237 dans la gorge 232 sont adaptés de sorte que lorsque les décrochements 452 reposent contre les décrochements 2332, 2333, la denture 237 pénètre dans l'encoche 454 du boîtier de protection 400.

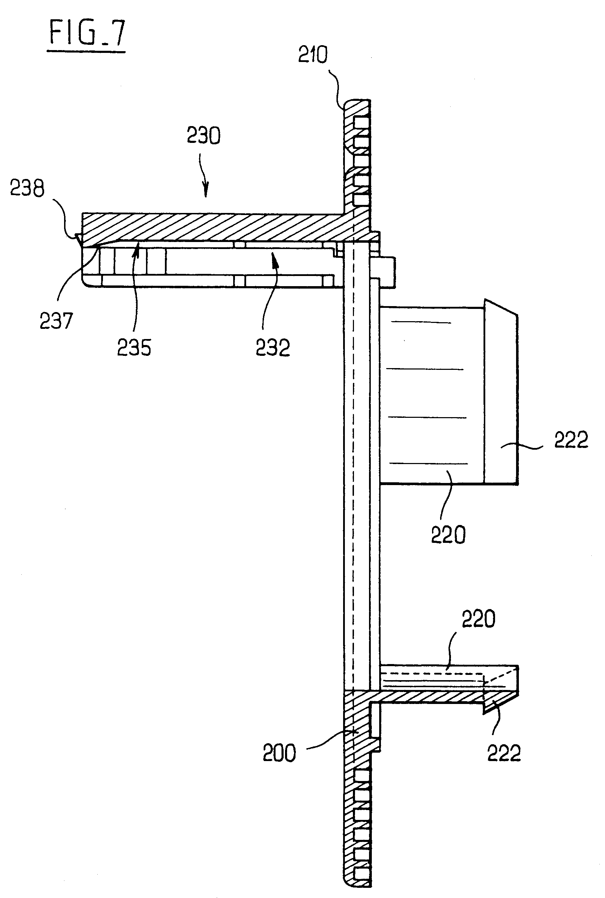

De préférence, comme on le voit sur la figure 7, le sommet de la languette 236 adjacent à la denture 237, c'est-à-dire l'extrémité de la languette 236 opposée à la paroi de base 210, et référencée 238 sur la figure 7, est avantageusement incliné par rapport à l'axe du couvercle pivotant 200. Cette surface inclinée 238 sollicite une paroi de l'encoche 454 et permet un verrouillage sans jeu du boîtier de protection 400.

Pour assembler le conducteur 300 équipé d'un boîtier de protection 400 conforme à la présente invention, on procède essentiellement comme suit.

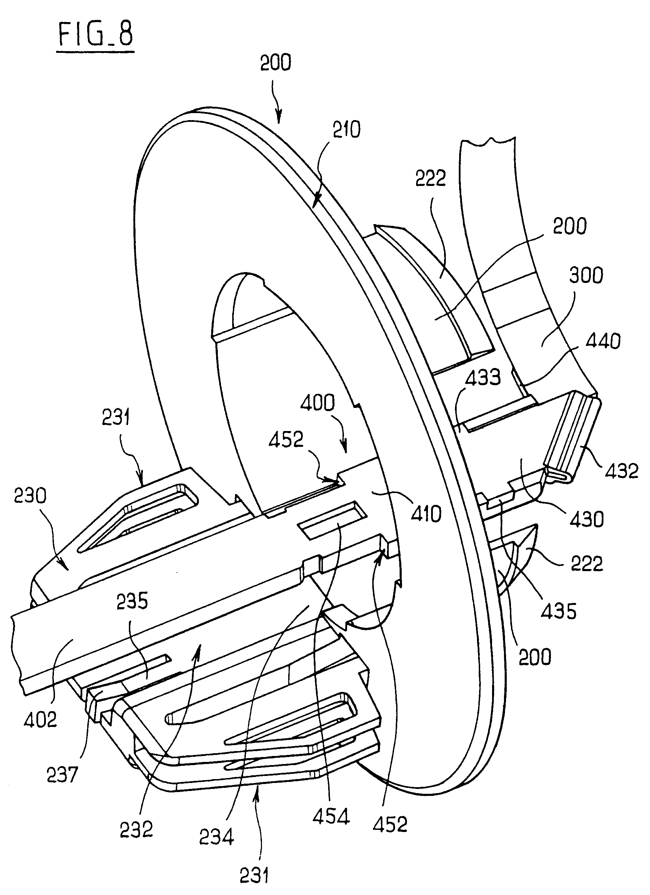

Le ruban conducteur 300 équipé du boîtier de protection 400 est engagé dans l'espace interne du couvercle pivotant 200, comme on le voit sur la figure 8.

Le cas échéant, au cours de cette étape, le ruban 300 peut être pré-équipé d'un connecteur, en extrémité. Dans ce cas, bien entendu, le passage central du couvercle pivotant 200 doit être adapté pour recevoir en traversée ce connecteur.

Le boîtier de protection 400 est alors engagé dans la gorge 232. Plus précisément, le prolongement 450 est engagé dans la zone en U 233 de cette gorge 232, tandis que l'élément 410 et l'embout 420 sur lequel est repliée la languette 430 sont engagés dans la zone 234 à bords convergents de cette gorge.

Cet engagement est réalisé jusqu'à ce que les épaulements 452 du boîtier de protection viennent en appui respectivement contre les épaulements 2332 et 2333 du corps de connecteur 230. Au cours de cet engagement, la languette 236 fléchit élastiquement jusqu'à pénétration de la dent 237 dans l'encoche 434. Après cet encliquetage la languette 236 reprend élastiquement sa position de repos. Grâce à sa surface d'extrémité inclinée 238 elle évite tout jeu entre le boîtier de protection 400 et le corps de connecteur 230, et par conséquent entre le ruban conducteur 300 et ce corps de connecteur 230.

En outre, l'encliquetage défini entre la dent 237 et l'encoche 454 évite tout démontage ou retrait intempestif du conducteur 300.

On notera par ailleurs que les ergots 433, 435 du boîtier de protection 400 contraints par la zone de pliage du ruban et la zone 432 de pliage du boîtier 400 sont sollicités en écartement de l'embout 420 et viennent par conséquent en appui sur le fond de la gorge 232 ou encore sur les bords convergents de cette gorge.

La structure proposée par la présente invention permet de localiser, maintenir et protéger le pli 302 formé sur le ruban conducteur 300.

Elle permet également une liaison rapide et sans jeu du ruban 300 y compris si celui-ci est équipé d'un connecteur.

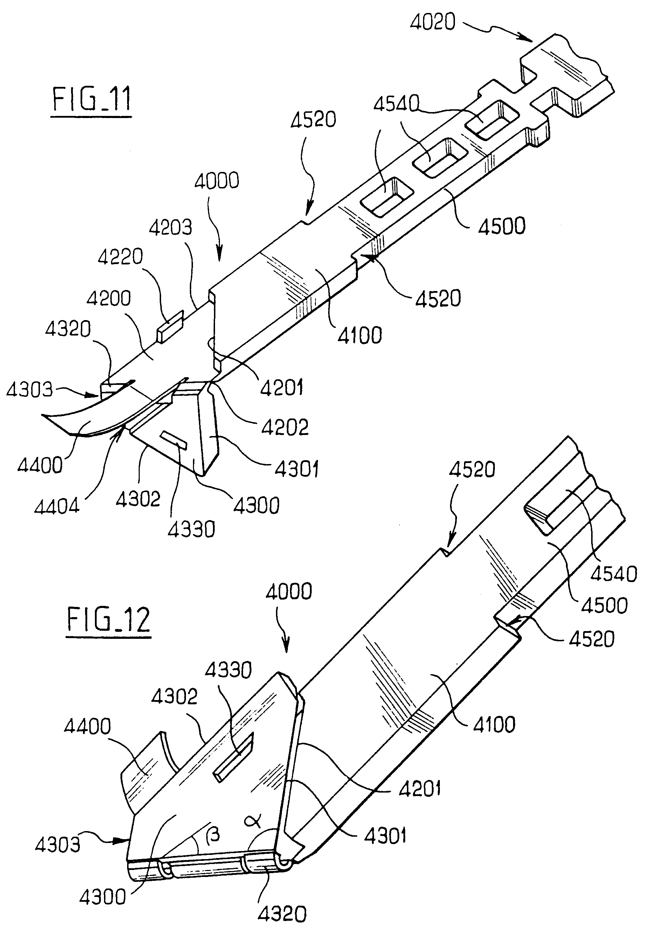

On va maintenant décrire le boîtier conforme à la seconde variante de réalisation de la présente invention, représentée sur les figures 11 et suivantes.

Les éléments du boîtier 4000 représenté sur les figures 11 et suivantes portent des références identiques, à un facteur 10 près, aux élements homologues de la première variante de réalisation représentée sur les figures 2 à 10.

Le boîtier 4000 est là encore conçu pour assurer la protection mécanique et une protection contre les détériorations électriques du conducteur souple 300.

Ce boîtier de protection 4000 est surmoulé sur le conducteur souple 300.

Plus précisément encore, le boîtier de protection 4000 est adapté selon l'invention pour être surmoulé en ligne sur le conducteur électrique souple 300. C'est-à-dire que de préférence le boîtier de protection 4000 est surmoulé sur le conducteur souple 300 au niveau d'un poste de surmoulage situé entre une bobine d'alimentation de conducteur souple nu 300 et un poste de réception comprenant une bobine de réception du conducteur souple 300 équipé du boîtier de protection 4000. Comme on le précisera par la suite, le boîtier 4000 permet en outre de surmouler simultanément plusieurs rubans 300 juxtaposés.

Le boîtier de protection 4000 peut être venu de moulage avec un enrobage 4020 qui entoure totalement ou le cas échéant de façon discontinue, une partie au moins de la longueur du conducteur souple 300.

Le corps du boîtier de protection 4000 représenté sur les figures 11 et suivantes comprend une première zone 4100 de section droite rectangulaire constante qui entoure totalement le conducteur 300.

Cet élément 4100 se prolonge longitudinalement par un embout latéral 4200. L'embout 4200 est coplanaire de l'une des faces de l'élément 4100 et présente de préférence une épaisseur qui est de l'ordre de la moitié de l'élément 4100. Ainsi cet embout 4200 est accolé à une face du conducteur souple 300. L'embout 4200 possède avantageusement la même largeur que l'élément 4100.

En outre, l'embout 4200 se prolonge, à l'opposé de l'élément 4100, par une languette 4300.

La languette 4300 est reliée à l'embout 4200 par une zone de liaison souple de faible épaisseur 4320. A titre d'exemple non limitatif la zone de liaison souple 4320 peut présenter une épaisseur de l'ordre de 0,3mm.

Plus précisément la languette 4300 présente un contour généralement similaire à celui de l'embout 4200. Cependant la languette 4300 présente de préférence une surface supérieure à celle de l'embout 4200.

Ainsi la languette 4300 recouvre l'embout 4200 après pliage autour de la zone de liaison 4320. Le ruban 300 est alors pris en sandwich entre la languette 4300 et l'embout 4200 et plié le long de la zone 4320 comme on le verra par la suite.

Selon le mode de réalisation préférentiel représenté sur les figures 11 et suivantes, le contour de l'embout 4200 et de la languette 4300 est adapté de sorte que lors du moulage, la languette 4300 ne dépasse pas du gabarit en largeur du surmoulage formé par l'élément 4100 et l'embout 4200. Ainsi la présente invention permet de surmouler simultanément plusieurs rubans 300 juxtaposés. Plus précisément la présente invention permet ainsi d'utiliser une feuille de matière plastique ou équivalent, de grande largeur, par exemple de 200 mm de large, pourvue de pistes métallisées, et de diviser cette feuille dans sa largeur pour obtenir plusieurs rubans 300 conformes à la présente invention, par exemple d'une largeur de 7,62 mm de large, en procédant immédiatement en aval du poste de découpe en largeur, au surmoulage simultané des différents boîtiers 4000 sur les rubans 300 respectifs.

Plus précisément encore selon le mode de réalisation représenté sur les figures 11 et suivantes, l'embout 4200 et la languette 4300 possèdent chacun un contour généralement triangulaire, avantageusement isocèle.

Les trois côtés principaux de l'embout 4200 sont référencés 4201, 4320 et 4203.

Les trois côtés principaux de la languette 4300 sont référencés 4301, 4320 et 4302.

La zone 4201 de raccordement de l'embout 4200 sur l'élément 4100 est de préférence rectiligne et inclinée par rapport à la direction longitudinale du ruban, par exemple de l'ordre de 45°.

La zone d'articulation 4320 est également rectiligne et inclinée par rapport à la direction longitudinale du ruban, par exemple de l'ordre de 45°. Ainsi l'inclinaison entre les zones 4201 et 4320 est avantageusement de l'ordre de 90° et ces deux zones 4201 et 4320 s'intersectent sensiblement sur un premier côté du surmoulage au niveau d'un point référencé 4202 sur les figures 11 et suivantes.

La base du triangle formé par l'embout 4200 est constituée par le côté 4203 du surmoulage opposé à ce point 4202.

A l'origine la languette 4300 est surmoulée dans une position inclinée, non coplanaire de l'embout 4200. La languette 4300 est de préférence inclinée d'environ 90°, au moment du moulage, par rapport à l'embout 4200. Cette disposition permet à la fois de ne pas dépasser le gabarit en largeur de l'embout 4200 et de l'élément 4100, et par conséquent de mouler simultanément plusieurs boîtiers 4000 sur des rubans 300 juxtaposés, tout en bénéficiant d'une languette qui s'étend après pliage au delà de la partie du ruban 300 pliée à 90°, c'est à dire au delà de la zone de recouvrement entre les deux brins superposés et repliés à 90° du ruban, afin de garantir une fixation fiable de la languette 4300 sur l'embout 4200.

La zone d'articulation 4320 forme un premier côté de la languette 4300. Un second côté 4301 de cette languette 4300, adjacent à la zone de liaison 4201 après pliage, est inclinée d'environ 90° par rapport au premier côté précité. Pour obtenir une languette 4300 qui s'étend au delà de la zone de recouvrement du ruban 300 plié, il est nécessaire que l'inclinaison α de ce côté 4301 (i.e. le côté 4301 de la languette 4300 qui se raccorde sur l'extrémité de la zone de pliage 4320 la plus proche de l'élément 4100) par rapport à la zone de pliage 4320 soit supérieure à l'inclinaison β, de cette zone de pliage 4320 par rapport à la direction longitudinale du ruban 300. Enfin le troisième côté 4302 de la languette 4300, est incliné d'environ 45° par rapport aux deux côtés précités 4320 et 4301 de ladite languette 4300.

Après pliage le côté 4302 de la languette 4300 est parallèle au côté 4203 de l'embout 4200. Plus précisément, de préférence le côté 4302 de la languette 4300 est raccordé à la zone charnière 4320 par l'intermédiaire d'un côté auxiliaire, lui-même orthogonal à la zone charnière 4320, de sorte qu'après pliage le côté 4302 de la languette 4300 soit placé au-delà du côté 4203 de l'embout 4200.

L'embout 4200 et la languette 4300 sont munis de moyens d'encliquetage complémentaires. Ces moyens d'encliquetage peuvent faire l'objet de nombreuses variantes de réalisation.

Selon le mode de réalisation particulier et non limitatif, représenté sur les figures 11 et suivantes, ces moyens d'encliquetage comprennent d'une part un ergot 4220 en saillie sur l'embout 4200 à proximité du côté longitudinal 4203 et d'autre part une ouverture complémentaire 4330 formée dans la languette 4300, à proximité du bord 4302. L'ergot 4220 est placé en regard du côté de liaison 4201 de l'embout 4200 et non pas en regard de la zone de liaison 4320, de sorte que cet ergot 4220 n'interfère pas avec la partie de ruban 300 repliée.

Le boîtier de protection 4000 présente en outre de préférence un appui souple 4400 conçu pour soutenir la partie du ruban 300 (non représenté sur les figures 11 et 12 pour simplifier l'illustration) qui émerge du boîtier 4000 aprés pliage à 90° selon la ligne 4201.

Selon le mode de réalisation particulier représenté sur les figures 11 et suivantes, cet appui est formé d'une lame initialement coplanaire, au moulage, de l'embout 4200, et qui se raccorde au milieu de la zone d'articulation 4320. En variante la lame qui forme l'appui 4400 pourrait être raccordée au côté 4302 de la languette 4300.

Ainsi aprés pliage à 90° de la languette 4300, autour de la zone 4320, la lame ou appui 4400 est orienté latéralement à 90° de l'embout pour soutenir le ruban 300.

On notera que de préférence la languette 4300 possède un décrochement 4304 en regard de cet appui 4400.

Après pliage du boîtier de protection 4000 autour de la ligne de faiblesse 4320, la languette 4300 recouvre l'embout 4200 et est immobilisée grâce à la coopération des moyens d'encliquetage 4220 et 4330. Le conducteur souple 300 est lui-même plié autour d'une ligne 302 présentant la même inclinaison que la ligne de faiblesse 4320, soit avantageusement 45° par rapport à la direction longitudinale du conducteur 300. Le conducteur 300 est ainsi plié de l'ordre de 90° et prend appui sur la structure 4400.

Le boîtier de protection 4000 conforme à la présente invention permet un pli naturel du ruban formant le conducteur 300. Là encore on peut envisager de marquer au préalable le ruban 300 sur la ligne 302 de pliage précitée pour faciliter le pli de ce ruban conducteur 300.

En outre, de préférence, l'élément 4100 du boîtier de protection se prolonge à l'opposé de l'embout 4200 par un élément 4500 de plus faible section transversale de sorte qu'un décrochement 4520 dirigé à l'opposé de l'embout 4200 soit défini au niveau de la zone de liaison entre les éléments 4100, 4500. Plus précisément, il est ainsi prévu un décrochement 4520 de chaque côté de l'élément 4500, soit sur les deux flancs de celui-ci, aptes à coopérer avec les décrochements 2333 précités.

De plus, le prolongement 4500 formé sur le boîtier de protection 4000 est muni de préférence d'au moins une encoche centrale 4540, par exemple de contour rectangulaire, et avantageusement longitudinale, apte à coopérer avec la structure de verrouillage 235-237 précitée.

On notera par ailleurs que de préférence, pour permettre après découpe en largeur d'une feuille, de surmouler simultanément plusieurs boitiers 4000 sur des rubans respectifs 300 juxtaposés, lesdits rubans 300 sont refendus ou échancrés latéralemnt au niveau du surmoulage de sorte que au moins localement le boitier 4000 surmoulé entoure totalement ces rubans 300. Au niveau du surmoulage, les rubans 300 peuvent ainsi être par exemple réduits en largeur de 7,62mm à 6,2mm.

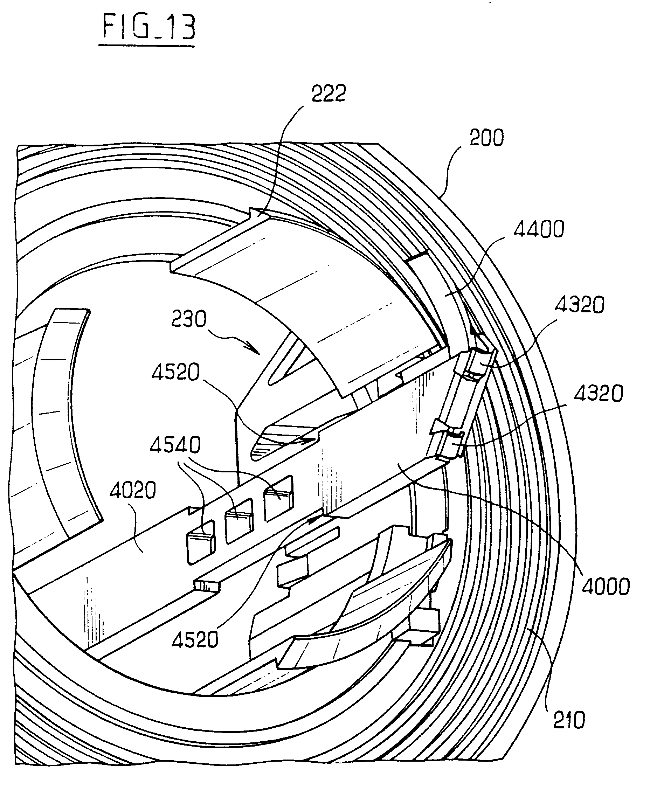

L'assemblage du ruban 300 équipé d'un boîtier 4000 sur le couvercle 200, est opéré comme indiqué précédemment pour le premier mode de réalisation. Cet assemblage est schématisé sur les figures 13 et suivantes.

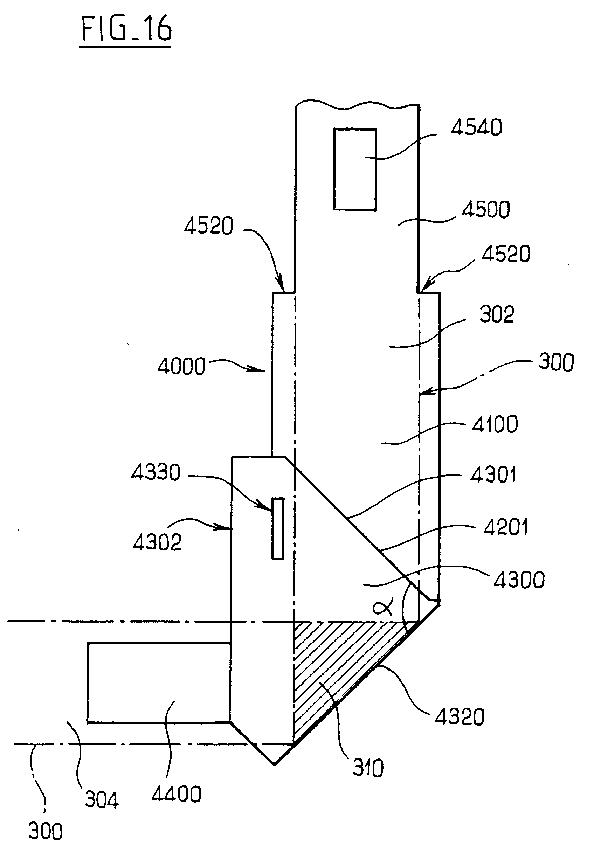

Sur la figure 16 on a schématisé en traits mixtes interrompus le ruban 300 et on a illustré sous la référence 310 une zone hachurée correspondant à la zone de superposition des deux brins 302, 304 du ruban 300 replié à 90°.

On aperçoit également sur la figure 16, le boîtier 4000, la languette 4300 et l'appui 4400. On comprend à l'examen de la figure 16 que la languette 4300 s'étend au-delà de la zone de superposition 310 et que les moyens de verrouillage 4330 sont placés dans la partie de cette languette 4300 située au-delà de cette zone de superposition 310.

## Revendications

1. Contacteur électrique tournant du type comprenant deux éléments (100, 200) susceptibles de rotation relative et un conducteur souple (300) placé entre ces deux éléments, et au moins sur une extrémité du conducteur souple (300), un boîtier de protection (400, 4000) surmoulé sur le conducteur souple (300), le boitier de protection (400, 4000) comprenant un élément (410, 4100) qui entoure totalement le conducteur (300),
caractérisé par le fait que cet élément se prolonge longitudinalement par un embout latéral (420, 4200) accolé contre une face du conducteur (300) et prolongé lui-même par une languette (430, 4300) reliée à l'embout par l'intermédiaire d'une ligne de faiblesse (432, 4320) inclinée par rapport à la direction longitudinale du conducteur (300) de sorte qu'après pliage de la languette (430, 4300) contre l'embout (420) autour de la ligne de faiblesse (432), le conducteur souple soit prié et que la zone de pliage ainsi obtenue soit protégée.

2. Contacteur selon la revendication 1, caractérisé par le fait que le boîtier de protection (400, 4000) comprend une ligne de faiblesse (432, 4320) inclinée de l'ordre de 45° par rapport à la direction longitudinale du conducteur souple (300), de sorte qu'après pliage du boitier de protection, le conducteur souple soit prié de l'ordre de 90°.

3. Contacteur selon l'une des revendications 1 ou 2, caractérisé par le fait que le boîtier de protection (400, 4000) est lié à un enrobage (402, 4020) qui entoure au moins partiellement le conducteur sur une partie de sa longueur.

4. Contacteur selon l'une des revendications 1 à 3, caractérisé par le fait que la languette (430) est à l'origine, avant pliage, coplanaire de l'embout (420) et inclinée par rapport à la direction longitudinale de l'embout (420).

5. Contacteur selon l'une des revendications 1 à 3, caractérisé par le fait que la languette (4300) est à l'origine, avant pliage, non coplanaire de l'embout (4200).

6. Contacteur selon la revendication 5, caractérisé par le fait que la languette (4300) est adaptée pour ne pas dépasser du gabarit en largeur du surmoulage tout en s'étendant après pliage au delà de la zone de recouvrement des deux brins superposés du ruban (300).

7. Contacteur selon l'une des revendications 1 à 6, caractérisé par le fait que la languette (4300) est de contour général triangulaire.

8. Contacteur selon l'une des revendications 1 à 7, caractérisé par le fait que l'un (4301) des bords de la languette (4300) présente une inclinaison (α) par rapport à la zone de pliage (4320) de cette languette (4300) supérieure à l'inclinaison (β) de cette zone de pliage (4320) par rapport à la direction longitudinale du ruban (300).

9. Contacteur selon l'une des revendications 1 à 8, caractérisé par le fait que l'un (4301) des bords de la languette (4300) présente une inclinaison (α) par rapport à la zone de pliage (4320) de cette languette (4300) de l'ordre de 90°.

10. Contacteur selon l'une des revendications 1 à 9, caractérisé par le fait que la languette (4300) est à l'origine, avant pliage, sensiblement orthogonale à l'embout (4200).

11. Contacteur selon l'une des revendications 1 à 10, caractérisé par le fait qu'il comprend des moyens (422, 424, 423, 425; 4220, 4330) de verrouillage de la languette (430, 4300) par rapport à l'embout (420, 4200).

12. Contacteur selon l'une des revendications 1 à 11, caractérisé par le fait que l'embout (420) comprend deux nervures longitudinales (422, 424) dont l'une au moins est pourvue d'une découpe (423, 425) sur sa longueur.

13. Contacteur selon la revendication 12, caractérisé par le fait que la languette (430) est munie d'au moins un ergot (433, 435) sur l'un de ses flancs latéraux, adapté pour pénétrer dans la découpe (423, 425) formée sur les nervures (422, 424) de l'embout (420).

14. Contacteur selon l'une des revendications 1 à 13, caractérisé par le fait que l'embout (4200) comprend un ergot (4220) en saillie tandis que la languette (4300) comprend une ouverture (4330) complémentaire.

15. Contacteur selon l'une des revendications 1 à 14, caractérisé par le fait que le boîtier de protection (400) comprend deux éléments adjacents (410, 450) de sections droites différentes, délimitant entre elles au moins un épaulement (452).

16. Contacteur selon l'une des revendications 1 à 15, caractérisé par le fait que le boîtier de protection (400) comprend en outre au moins une encoche (454).

17. Contacteur selon l'une des revendications 1 à 16, caractérisé par le fait que le boîtier (400, 4000) possède un élément souple (440, 4400) servant d'appui à la partie repliée du ruban (300).

18. Contacteur selon la revendication 17, caractérisé par le fait que l'élément d'appui souple (440) se raccorde latéralement sur une embout (420) du boîtier, à l'opposé de la languette articulée (430).

19. Contacteur selon la revendication 17, caractérisé par le fait que l'élément d'appui souple (4400) se raccorde à un embout du boîtier (4000) au niveau d'une zone d'articulation (4320) de la languette (4300) sur l'embout (4200).

20. Contacteur selon la revendication 19, caractérisé par le fait que l'élément d'appui souple (4400) est initialement coplanaire de l'embout (4200), tandis que la languette (4300) est initialement non coplanaire de cet embout (4200).

21. Contacteur selon la revendication 17, caractérisé par le fait que l'élément d'appui souple (4400) se raccorde sur un côté (4302) de la languette (4300) articulée sur un embout (4200) du boîtier (4000).

22. Contacteur selon l'une des revendications 1 à 21, caractérisé par le fait que le conducteur souple (300) est réduit en largeur au niveau du boîtier (400, 4000).

23. Contacteur selon l'une des revendications 1 à 22, caractérisé par le fait que le conducteur souple (300) est formé par découpe en largeur d'un film souple métallisé et que plusieurs boîtiers (4000) sont surmoulés simultanément et respectivement sur les conducteurs souples (300) ainsi formés.

24. Contacteur selon l'une des revendications 1 à 23, caractérisé par le fait que l'un des deux éléments fixe ou mobile (100, 200) comprend un corps de connecteur (130, 230) pourvu d'une gorge (232) adaptée pour recevoir le boîtier de protection (400).

25. Contacteur selon la revendication 24, caractérisé par le fait que la gorge (232) comprend une zone (234) formée d'une rainure à bords convergents.

26. Contacteur selon l'une des revendications 24 ou 25, caractérisé par le fait que la gorge (232) présente une zone formant une rainure (233) de section droite en U.

27. Contacteur selon la revendication 25, caractérisé par le fait que la largeur de la rainure (234) à bords convergents est complémentaire de la largeur du corps de boîtier (410).

28. Contacteur selon la revendication 25, caractérisé par le fait que la largeur d'ouverture de la rainure à bords convergents (234) est égale à la largeur d'un prolongement (450) prévu sur le boîtier de protection (400).

29. Contacteur selon les revendications 25 et 26 prises en combinaison, caractérisé par le fait que la largeur d'ouverture de la rainure à bords convergents (234) est égale à la largeur d'ouverture de la rainure en U (233).

30. Contacteur selon l'une des revendications 1 à 29, caractérisé par le fait que le corps de connecteur (130, 230) prévu sur l'un des éléments (100, 200) comprend en outre un moyen de verrouillage du boîtier de protection (400).

31. Contacteur selon la revendication 30, caractérisé par le fait que le moyen de verrouillage est formé d'une languette élastique (236) venue de moulage sur le corps de connecteur (130, 230).

32. Contacteur selon la revendication 31, caractérisé par le fait que la languette élastique (236) est pourvue d'une dent en saillie (237).

33. Contacteur selon l'une des revendications 31 ou 32, caractérisé par le fait que le sommet de la languette (236) est incliné par rapport à l'axe de l'élément associé.

## Claims

1. A rotary electrical contactor of the type comprising two elements (100, 200) that can be rotated relative to each other, a flexible conductor (300) placed between the two elements, and, on at least one end of the flexible conductor (300), a protective tab (400, 4000) overmolded on the flexible conductor (300), the protective tab (400, 4000) including an element(410, 4100) that surrounds the conductor (300) completely;
said contactor being characterized by the fact that said element is extended longitudinally by a side end-piece (420, 4200) disposed touching one face of the conductor (300) and itself extended by a tongue (430, 4300) connected to the end-piece via a line of weakness (432, 4320) sloping relative to the longitudinal direction of the conductor (300) so that, once the tongue (430, 4300) has been folded against the end-piece (420) about the line of weakness (432), the flexible conductor is folded, and the resulting fold zone is protected.

2. A contactor according to claim 1, characterized by the fact that the protective tab (400, 4000) is provided with a line of weakness (432, 4320) sloping by about 45° relative to the longitudinal direction of the flexible conductor (300) so that, once the protective tab has been folded, the flexible conductor is folded at about 90°.

3. A contactor according to claim 1 or 2, characterized by the fact that the protective tab (400, 4000) is associated with a covering (402, 4020) which surrounds the conductor at least in part over a portion of its length.

4. A contactor according to any one of claims 1 to 3, characterized by the fact that initially, prior to being folded, the tongue (430) is coplanar with the end-piece (420) and slopes relative to the longitudinal direction of the end-piece (420).

5. A contactor according to any one of claims 1 to 3, characterized by the fact that initially, prior to being folded, the tongue (4300) is not coplanar with the end-piece (4200).

6. A contactor according to claim 5, characterized by the fact that the tongue (4300) is organized to stay within the overall width of the overmolding, while extending beyond the overlap zone of the two superposed segments of the tape (300) after folding.

7. A contactor according to any one of claims 1 to 6, characterized by the fact that the tongue (4300) is of substantially triangular outline.

8. A contactor according to any one of claims 1 to 7, characterized by the fact that one of the edges (4301) of the tongue (4300) slopes relative to the fold zone (4320) of the tongue (4300) at an inclination (α) that is greater than the inclination (β) at which the fold zone (4320) slopes relative to the longitudinal direction of the tape (300).

9. A contactor according to any one of claims 1 to 8, characterized by the fact that one of the edges (4301) of the tongue (4300) slopes relative to the fold zone (4320) of the tongue (4300) at an inclination (α) of about 90°.

10. A contactor according to any one of claims 1 to 9, characterized by the fact that initially, prior to being folded, the tongue (4300) is substantially orthogonal to the end-piece (4200).

11. A contactor according to any one of claims 1 to 10, characterized by the fact that it includes means (422, 424, 423, 425; 4220, 4330) for locking the tongue (430, 4300) relative to the end-piece (420, 4200).

12. A contactor according to any one of claims 1 to 11, characterized by the fact that the end-piece (420) is provided with two longitudinal ribs (422, 424), at least one of which is provided with a notch (423, 425) along its length.

13. A contactor according to claim 12, characterized by the fact that the tongue (430) is provided with at least one lug (433, 435) on at least one of its side flanks, suitable for penetrating into the notches (423, 425) formed in the ribs (422, 424) of the end-piece (420).

14. A contactor according to any one of claims 1 to 13, characterized by the fact that the end-piece (4200) is provided with a projecting lug (4220), while the tongue (4300) is provided with a complementary opening (4330).

15. A contactor according to any one of claims 1 to 14, characterized by the fact that the protective tab (400) comprises two adjacent elements (410, 450) having different cross-section sizes, defining at least one shoulder (452) between them.

16. A contactor according to any one of claims 1 to 15, characterized by the fact that the protective tab (400) is further provided with at least one slot (454).

17. A contactor according to any one of claims 1 to 16, characterized by the fact that the tab (400, 4000) has a flexible element (440, 4400) serving as an abutment for the folded-over portion of the tape (300).

18. A contactor according to claim 17, characterized by the fact that the flexible abutment element (440) is connected to an end-piece (420) of the tab, on the other side of said end-piece from the hinged tongue (430).

19. A contactor according to claim 17, characterized by the fact that the flexible abutment element (4400) is connected to an end-piece of the tab (4000) at a hinge zone (4320) in which the tongue (4300) is hinged to the end-piece (4200).

20. A contactor according to claim 19, characterized by the fact that the flexible abutment element (4400) is initially coplanar with the end-piece (4200), while the tongue (4300) is initially not coplanar with said end-piece (4200).

21. A contactor according to claim 17, characterized by the fact that the flexible abutment element (4400) is connected to one side (4302) of the tongue (4300) hinged to an end-piece (4200) of the tab (4000).

22. A contactor according to any one of claims 1 to 21, characterized by the fact that the flexible conductor (300) is narrowed at the tab (400, 4000).

23. A contactor according to any one of claims 1 to 22, characterized by the facts that the flexible conductor (300) is formed by cutting up a metal-plated flexible film widthwise, and that a plurality of tabs (4000) are overmolded simultaneously onto respective ones of the flexible conductors (300) formed in this way.

24. A contactor according to any one of claims 1 to 23, characterized by the fact that either the fixed one or the moving one of the elements (100, 200) includes a connector body (130, 230) provided with a keyway (232) suitable for receiving the protective tab (400).

25. A contactor according to claim 24, characterized by the fact that the keyway (232) is provided with a zone (234) formed of a groove having convergent edges.

26. A contactor according to claim 24 or 25, characterized by the fact that the keyway (232) has a zone forming a channel-section groove (233).

27. A contactor according to claim 25, characterized by the fact that the width of the groove (234) having convergent edges is complementary to the width of the body of the tab (410).

28. A contactor according to claim 25, characterized by the fact that the open width of the groove having convergent edges (234) is equal to the width of an extension (450) provided on the protective tab (400).

29. A contactor according to claims 25 and 26 in combination, said contactor being characterized by the fact that the open width of the groove having convergent edges (234) is equal to the open width of the channel-section groove (233).

30. A contactor according to any one of claims 1 to 29, characterized by the fact that the connector body (130, 230) provided on one of the elements (100, 200) further includes locking means for locking the protective tab (400).

31. A contactor according to claim 30, characterized by the fact that the locking means are formed by a resilient tongue (236) integrally molded on the connector body (130, 230).

32. A contactor according to claim 31, characterized by the fact that the resilient tongue (236) is provided with a projecting tooth (237).

33. A contactor according to claim 31 or 32, characterized by the fact that the tip of the tongue (236) slopes relative to the axis of the associated element.

## Patentansprüche

1. Elektrischer Drehschalter mit zwei Elementen (100, 200), die relativ zueinander drehbar sind, und mit einem flexiblen Leiter (300), der zwischen den beiden Elementen angeordnet ist, sowie einem Schutzgehäuse (400, 4000) wenigstens an einem Ende des flexiblen Leiters (300), das an den flexiblen Leiter (300) gegossen ist, wobei das Schutzgehäuse (400, 4000) ein Element (410, 4100) umfaßt, das den Leiter (300) vollständig umgibt, dadurch gekennzeichnet, daß dieses Element in Längsrichtung in einen seitlichen Ansatz (420, 4200) übergeht, der an einer Außenfläche des Leiters (300) anliegt und seinerseits in eine Zunge (430, 4300) übergeht, die mit dem Ansatz über eine dazwischen liegende Schwächungslinie (432, 4320) verbunden ist, die bezüglich der Längsrichtung des Leiters (300) schräg verläuft, derart, daß nach dem Umfalten der Zunge (430, 4300) gegen den Ansatz (420) um die Schwächungslinie (432) der flexible Leiter umgefaltet ist und der in dieser Weise erhaltene Faltbereich geschützt ist.

2. Schalter nach Anspruch 1, dadurch gekennzeichnet, daß das Schutzgehäuse (400, 4000) eine Schwächungslinie (432, 4320) umfaßt, die in der Größenordnung von 45° bezüglich der Längsrichtung des flexiblen Leiters (300) schräg verläuft, derart, daß nach dem Umfalten des Schutzgehäuses der flexible Leiter unter einem Winkel in der Größenordnung von 90° umgefaltet ist.

3. Schalter nach Anspruch 1 oder 2, dadurch gekennzeichnet, daß das Schutzgehäuse (400, 4000) mit einem Mantel (402, 4020) verbunden ist, der wenigstens teilweise den Leiter über einen Teil seiner Länge umgibt.

4. Schalter nach einem der Ansprüche 1 bis 3, dadurch gekennzeichnet, daß die Zunge (430) ursprünglich vor dem Umfalten zum Ansatz (420) koplanar und bezüglich der Längsrichtung des Ansatzes (420) schräg verläuft.

5. Schalter nach einem der Ansprüche 1 bis 3, dadurch gekennzeichnet, daß die Zunge (4300) ursprünglich vor dem Umfalten nicht koplanar zum Ansatz (4200) verläuft.

6. Schalter nach Anspruch 5, dadurch gekennzeichnet, daß die Zunge (4300) so ausgebildet ist, daß sie die Größe des Formteils nicht überschreitet, jedoch nach dem Umfalten über den Bereich der Überdeckung der beiden übereinander liegenden Bahnen des Bandes (300) hinausgeht.

7. Schalter nach einem der Ansprüche 1 bis 6, dadurch gekennzeichnet, daß die Zunge (4300) eine im wesentlichen dreieckige Form hat.

8. Schalter nach einem der Ansprüche 1 bis 7, dadurch gekennzeichnet, daß einer (4301) der Ränder der Zunge (4300) einen Neigungswinkel (α) bezüglich des Faltbereiches (4320) dieser Zunge (4300) hat, der größer als der Neigungswinkel (β) des Faltbereiches (4320) bezüglich der Längsrichtung des Bandes (300) ist.

9. Schalter nach einem der Ansprüche 1 bis 8, dadurch gekennzeichnet, daß einer (4301) der Ränder der Zunge (4300) einen Neigungswinkel (α) bezüglich des Faltbereiches (4320) der Zunge (4300) in der Größenordnung von 90° hat.

10. Schalter nach einem der Ansprüche 1 bis 9, dadurch gekennzeichnet, daß die Zunge (4300) ursprünglich vor dem Umfalten im wesentlichen senkrecht zum Ansatz (4200) verläuft.

11. Schalter nach einem der Ansprüche 1 bis 10, dadurch gekennzeichnet, daß er Einrichtungen (422, 424, 423, 425; 4220, 4330) zum Verrasten der Zunge (430, 4300) bezüglich des Ansatzes (420, 4200) umfaßt.

12. Schalter nach einem der Ansprüche 1 bis 11, dadurch gekennzeichnet, daß der Ansatz (420) zwei längs verlaufende Rippen (422, 424) umfaßt, von denen wenigstens eine mit einem Ausschnitt (423, 425) über ihre Länge versehen ist.

13. Schalter nach Anspruch 12, dadurch gekennzeichnet, daß die Zunge (430) mit wenigstens einer Nase (433, 435) an einer ihrer Seiten versehen ist, die in den Ausschnitt (423, 425) eintreten kann, der an den Rippen (422, 424) des Ansatzes (420) ausgebildet ist.

14. Schalter nach einem der Ansprüche 1 bis 13, dadurch gekennzeichnet, daß der Ansatz (4200) eine vorstehende Nase (4220) umfaßt, während die Zunge (4300) eine komplementäre Öffnung (4330) umfaßt.

15. Schalter nach einem der Ansprüche 1 bis 14, dadurch gekennzeichnet, daß das Schutzgehäuse (400) zwei benachbarte Elemente (410, 450) mit verschiedenen Querschnitten umfaßt, die dazwischen wenigstens eine Schulter (452) bilden.

16. Schalter nach einem der Ansprüche 1 bis 15, dadurch gekennzeichnet, daß das Schutzgehäuse (400) weiterhin wenigstens eine Aussparung (454) umfaßt.

17. Schalter nach einem der Ansprüche 1 bis 16, dadurch gekennzeichnet, daß das Gehäuse (400, 4000) ein flexibles Element (440, 4400) aufweist, das als Unterlage für den umgefalteten Teil des Bandes (300) dient.

18. Schalter nach Anspruch 17, dadurch gekennzeichnet, daß sich das flexible Unterlageelement (440) seitlich an einen Ansatz des Gehäuses der angelenkten Zunge (430) gegenüber anschließt.

19. Schalter nach Anspruch 17, dadurch gekennzeichnet, daß sich das flexible Unterlageelement (440) an einen Ansatz des Gehäuses (4000) auf der Höhe eines Bereiches (4320) anschließt, an dem die Zunge (4300) an den Ansatz (4200) angelenkt ist.

20. Schalter nach Anspruch 19, dadurch gekennzeichnet, daß das flexible Unterlageelement (4400) am Anfang koplanar zum Ansatz (4200) verläuft, während die Zunge (4300) am Anfang zu diesem Ansatz (4200) nicht koplanar verläuft.

21. Schalter nach Anspruch 17, dadurch gekennzeichnet, daß das flexible Unterlageelement (4400) sich an einen Rand (4302) der Zunge (4300) anschließt, der an einen Ansatz (4200) des Gehäuses (4000) angelenkt ist.

22. Schalter nach einem der Ansprüche 1 bis 21, dadurch gekennzeichnet, daß der flexible Leiter (300) auf der Höhe des Gehäuses (400, 4000) eine geringere Breite hat.

23. Schalter nach einem der Ansprüche 1 bis 22, dadurch gekennzeichnet, daß der flexible Leiter (300) dadurch gebildet ist, daß eine metallisierte flexible Folie in ihrer Breite zugeschnitten wird und daß mehrere Gehäuse (400) gleichzeitig und jeweils auf die in dieser Weise gebildeten flexiblen Leiter (300) gegossen sind.

24. Schalter nach einem der Ansprüche 1 bis 23, dadurch gekennzeichnet, daß das feste oder mobile Element der beiden Elemente (100, 200) einen Verbindungskörper (130, 230) aufweist, der mit einer Vertiefung (232) zur Aufnahme des Schutzgehäuses (400) versehen ist.

25. Schalter nach Anspruch 24, dadurch gekennzeichnet, daß die Vertiefung (232) einen Bereich (234) umfaßt, der in Form einer Rille mit zusammenlaufenden Rändern ausgebildet ist.

26. Schalter nach Anspruch 24 oder 25, dadurch gekennzeichnet, daß die Vertiefung (232) einen Bereich aufweist, der von einer Rille (233) mit einem U-förmigen Querschnitt gebildet ist.

27. Schalter nach Anspruch 25, dadurch gekennzeichnet, daß die Breite der Rille (234) mit zusammenlaufenden Rändern zur Breite des Gehäusekörpers (410) komplementär ist.

28. Schalter nach Anspruch 25, dadurch gekennzeichnet, daß die Breite der Öffnung der Rille mit zusammenlaufenden Rändern (234) gleich der Breite einer Verlängerung (450) ist, die am Schutzgehäuse (400) vorgesehen ist.

29. Schalter nach einer Kombination der Ansprüche 25 und 26, dadurch gekennzeichnet, daß die Breite der Öffnung der Rille (234) mit zusammenlaufenden Rändern gleich der Breite der Öffnung der U-förmigen Rille (233) ist.

30. Schalter nach einem der Ansprüche 1 bis 29, dadurch gekennzeichnet, daß der Verbindungskörper (130, 230), der an einem der Elemente (100, 200) vorgesehen ist, weiterhin Verriegelungseinrichtungen für das Schutzgehäuse (400) umfaßt.

31. Schalter nach Anspruch 30, dadurch gekennzeichnet, daß die Verriegelungseinrichtungen in Form einer elastischen Zunge (236) ausgebildet sind, die durch Angießen an den Verbindungskörper (130, 230) vorgesehen ist.

32. Schalter nach Anspruch 31, dadurch gekennzeichnet, daß die elastische Zunge (236) mit einem vorstehenden Zahn (237) versehen ist.

33. Schalter nach Anspruch 31 oder 32, dadurch gekennzeichnet, daß der Scheitel der Zunge (236) bezüglich der Achse des zugehörigen Elementes schräg verläuft.
